Europäisches Patentamt

European Patent Office

Office européen des brevets

(11) Publication number: **0 280 523**
**A2**

## (12) EUROPEAN PATENT APPLICATION

(21) Application number: 88301569.5

(22) Date of filing: 24.02.88

(51) Int. Cl.⁴: **G 06 F 9/44**

(30) Priority: 25.02.87 JP 40027/87

(43) Date of publication of application:
31.08.88 Bulletin 88/35

(84) Designated Contracting States: DE FR GB

(71) Applicant: **KABUSHIKI KAISHA TOSHIBA**
**72, Horikawa-cho Saiwai-ku**
**Kawasaki-shi Kanagawa-ken 210 (JP)**

(72) Inventor: **Okamoto, Toshio c/o Patent Division**
**Toshiba Corporation Principal Office**
**1-1, Shibaura Minato-ku Tokyo (JP)**

**Saito, Mitsuo c/o Patent Division**
**Toshiba Corporation Principal Office**
**1-1, Shibaura Minato-ku Tokyo (JP)**

**Imai, Toru c/o Patent Division**
**Toshiba Corporation Principal Office**
**1-1, Shibaura Minato-ku Tokyo (JP)**

(74) Representative: **Shindler, Nigel et al**
**BATCHELLOR, KIRK & EYLES 2 Pear Tree Court**
**Farringdon Road**
**London EC1R 0DS (GB)**

(54) Computer system conversion apparatus.

(57) A computer system conversion apparatus having a microprogram storage unit and a conversion unit. The microprogram storage unit stores the microprogram which converts an address of input/output equipment and a data in a specific computer system into those in another computer system. The conversion unit converts the address of the input/output equipment and the data in the specific computer system in to those in the said different computer system in accordance with the microprogram stored in the microprogram storage unit.

FIG. 1

**Description**

COMPUTER SYSTEM CONVERSION APPARATUS

The present invention relates to a computer system conversion apparatus to allow the use of control programs from a computer system having one input/output operating system for controlling input/output equipment in another computer system having a different input/output operating system.

When a program developed by a specific computer is executed by a different computer, the different computer may not operate under the original program in many cases. This is because, even if these computers are equipped with the same type of CPUs (Central Processing Unit), their methods of inputing/outputing, connecting addresses of input/output equipment, interruption handling, etc., differ in many cases. In the other words, in case of a program in which an operating system input/output service routine for the input/output control and the memory control is used as the input/output means, a computer to which the program is to be installed can be operated in the same manner as the computer which has developed the original program if the computer have the same operating system.

However, in the case where, for instance, the data is output to a bit map display unit directory or when a high speed input/output operation is necessary, an input/output processing must be directly carried out without the aid of the operating system. When such a program is to be installed in another computer system having a different computer system, it is necessary to re-compile the program by modifying the input/output portion of the source program, or to run the program only after running an emulation program which matches the computer system of the original system.

However, re-compiling the program by modifying the source program which was once developed had to be applied to all programs to be installed and a considerable amount of cost was required for its modification.

Further, if the compatibility of programs is realized by an emulation software, the program execution speed decreases substantially. Therefore, in case of programs requiring realtime processing where execution time is critical, the installation using emulation software is difficult.

As described above, when programs prepared by a specific computer relative to input/output control are applied to input/output equipment in another different computer system, it is necessary to modify the program itself or execute an emulation program. This causes such problems as increased cost for program modification, and decreased program execution speed, etc.

SUMMARY OF THE INVENTION

It is an object of present invention is to provide an improved computer system conversion apparatus which requires no program modification and increases program execution speed.

Briefly, in accordance with one aspect of the invention, there is provided a computer system conversion apparatus having a microprogram storage unit storing a microprogram which converts addresses of input/output equipments and a data in a specific computer system into those in another different computer system, and a conversion unit which converts the address of the input/output equipment and the data on input/output procedure in the specific computer system into those in the another different computer system in accordance with the microprogram stored in the microprogram storage unit.

BRIEF DESCRIPTION OF DRAWINGS

A more complete appreciation of the invention and many of the attendant advantages thereof will be readily obtained as the same becomes better understood by reference to the following detailed description when considered in connection with the accompanying drawings, wherein:

    FIGURE 1 is a block diagram illustrating a schematic configuration of a computer system using a computer system conversion apparatus according to an embodiment of present invention;

    FIGURE 2 is a block diagram illustrating a schematic configuration of a memory management unit of the computer system conversion apparatus according to the embodiment of FIGURE 1;

    FIGURE 3 is a block diagram illustrating a schematic configuration of a resource management unit composed in the computer system conversion apparatus according to the embodiment of FIGURE 1;

    FIGURE 4 is a diagram for explaining the conversion operation of the resource management unit of FIGURE 3 ;

    FIGURES 5 and 6 are diagrams of actual examples of the conversion procedure using the computer system conversion apparatus according to the embodiment of present invention.

DESCRIPTION OF THE PREFERRED EMBODIMENT

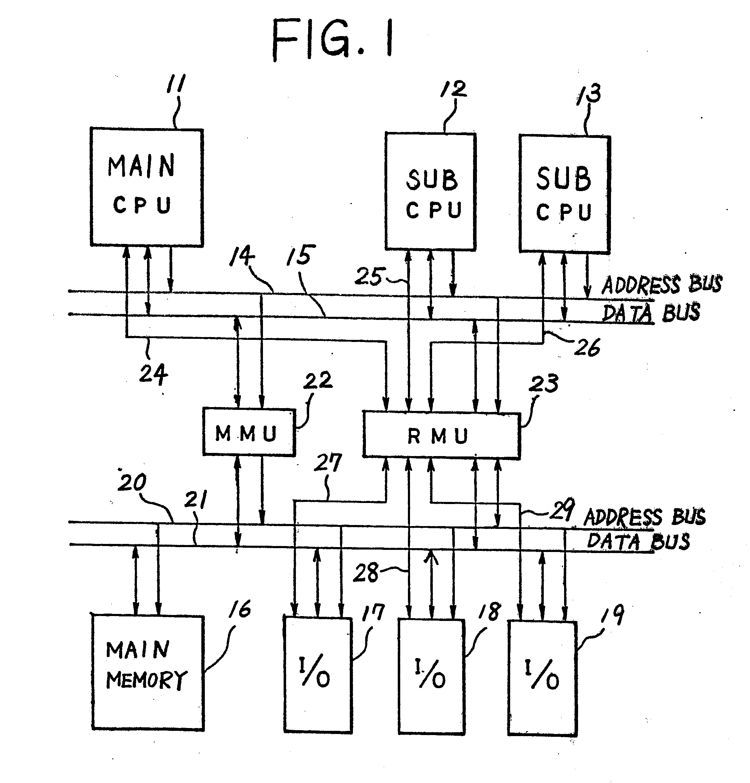

FIGURE 1 shows the configuration of a computer system with the present invention. In this system, the main CPU 11, which governs the entire control of the system, and sub CPUs 12 and 13, which are objects of program installation, are connected through a first address bus 14 and a first data bus 15. A main memory 16 and I/O equipment 17, 18 and 19, which control input/output, are connected through a second address bus 20 and a data bus 21. Furthermore, the above-mentioned first address bus 14 and the data bus 15, and second address bus 20 and the data bus 21 are connected through a memory management unit (hereinafter called "MMU") 22, which converts virtual addresses into physical addresses, and a resource management unit (hereinafter called "RMU") 23, which converts input/output processing. Control buses **24** to **29** from the CPUs **11** to **13** and I/O equipment **17** to **19** are connected to RMU **23**.

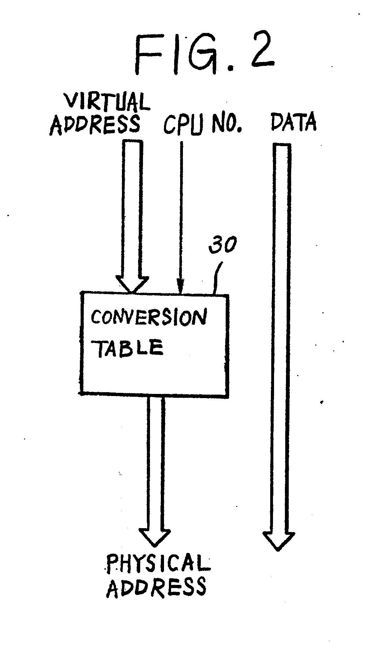

In the computer system, MMU **22** includes a conversion table **30** (as shown in **FIGURE** 2), and converts an input virtual address and a CPU number which produced this virtual address into an physical address in the main memory **16** by decoding the input virtual address and the CPU number. Thus, addresses checked by CPUs **11** to **13** can be adjusted. Further, no conversion processing is done on the data.

Further, RMU **23** has a function to convert virtual I/O addresses, I/O data and interruption control information between CPUs **11** to **13**, and main memory **16** and I/O equipment **17** to **19**. As a result, the conversion of addresses, data and interrupt signals between optional CPUs, for instance, from the sub CPU **12** to the main CPU **11** becomes possible.

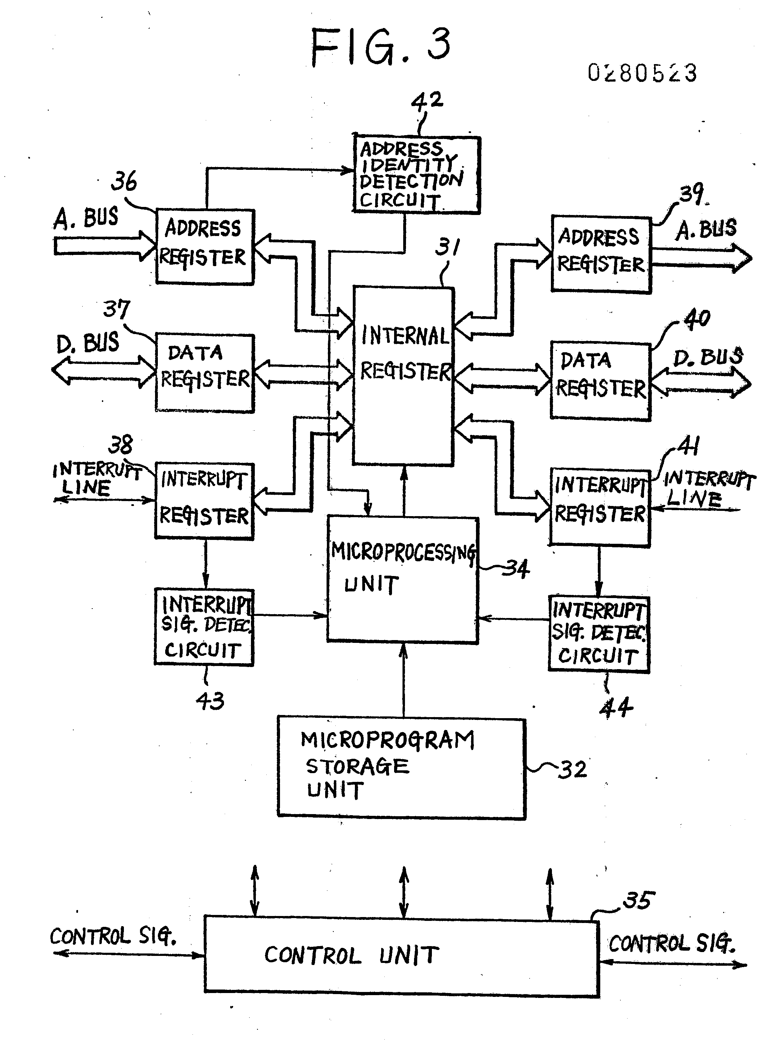

RMU **23** is further described in detail, as shown in **FIGURE** 3. This RMU **23** is designed to perform the conversion process of I/O address, I/O data, and interruption information, etc., stored in an internal register **31**. This is done by processing a microprogram for conversion stored in a microprogram storage unit **32** through a microprocessing unit **34** under the control of a control unit **35**. The RMU **23** comprises the microprocessing unit **34** and the internal register **31**.

Further, a CPU side address register **36**, a data register **37** and an interruption register **38** are provided at the CPU side for temporary storage of various information which has been input from the CPU side to the RMU **23**, while a peripheral equipment side address register **39**, a data register **40** and an interruption register **41** are provided at the peripheral equipment side for temporary storage of various information which has been converted by the internal register **31**. CPU side address register **36** is connected to the address identity detection circuit **42**, and when a value of the address stored in CPU side address register **36** coincides with the address (address requiring no address conversion) provided for the detection circuit **42**, a signal specifying the absence of address conversion is output to the microprocessing unit.

Furthermore, an interruption signal detection circuits **43** and **44** are connected to the CPU side interruption register **38** and the peripheral equipment side intrruption register **41**, respectively. The microprocessing unit **34** interrupts the execution of the processing properly according to detection signals from these interruption signal detection signals from these interruption signal detection circuits **43** and **44**, and executes the procedures in response to the interruption signal. Thereafter, the microprocessing unit **34** returns to its state just before the interruption.

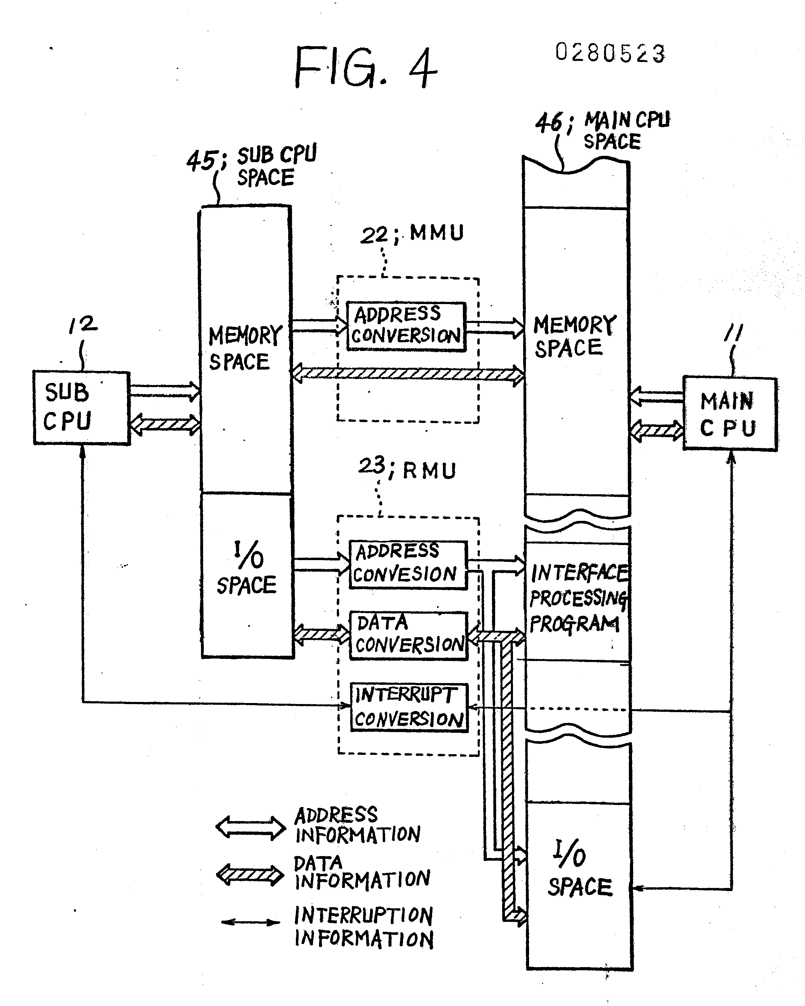

Taking the coversion from the sub CPU **12** to the main CPU **11** as an example in the above-mentioned system configuration, as shown in **FIGURE** 4, first of all, the sub CPU **12** makes the required access of a sub CPU space **45**.

The virtual address in the memory space of the sub CPU space **45** and that of the main CPU space **46** specify the same physical address of the main memory through MMU22, and therefore, the access to the sub CPU space **45** through the address conversion function of MMU **22** is converted into the access to the address corresponding to the main CPU space **46**.

On the other hand, when the sub CPU **12** accesses the I/O space of the sub CPU space **45**, the I/O equipment **17** to **19** which were controlled in the main CPU space **46** can be started. In this case, it is expected that the difficulty of the conversion process of input/output procedures may differ depending upon whether the I/O equipment which is provided to be controlled by the sub CPU space **45** and the I/O equipment available in the main CPU space **46** are difficult.

Therefore, in this embodiment, if the input/output procedure is easy, only the conversion by the RMU **23** is performed, and if the conversion is difficult, an interface program available in the main CPU space **46** is used in addition to the above-mentioned conversion process by the RMU **23**. Because of this, the RMU **23** performs two types of processing; simple conversion processing of addresses to these corresponding to the main CPU space **46** according to the I/O address of the sub CPU space **45**, and other processing to write the I/O program written in the sub CPU space **45** into the argument area of an interface processing program in the main CPU space **46**.

Further, as to data, conversion processes are performed, such as a so-called byte swapping problems, etc., between the equipment which has different storing sequences of upper and lower bytes of for instance, 16 bits data into a memory are performed. In addition, RMU23 performs a conversion for adjusting the timing, the form, etc., of the interrupt signals between the sub CPU **12** and the main CPU **11**.

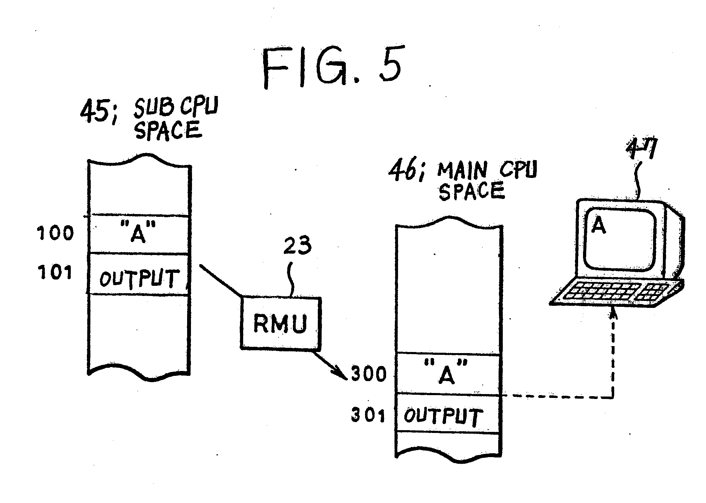

Further explanation will be provided hereinafter with reference to a definite example. **FIGURE** 5 shows an example to start peripheral equiment **47** composed in the main CPU, which is under the control of the main CPU. When the sub CPU writes data "A" and "Output" into virtual addresses "100, 101" assigned to the input/output interface register for peripheral equipment in the sub CPU space **45** in order to output a character "A" to the peripheral equipment **47**, RMU **23** recognizes that a simple address conversion process is required from the virtual addresses "100, 101". This knowledge has been given in advance by the main CPU. The RMU **23** writes the input/output procedure of "A" and "Output" into addresses "300, 301", which become the input/output interface registers for the peripheral equipment. Thus, data "A" is output and displayed on the peripheral equipment **47**.

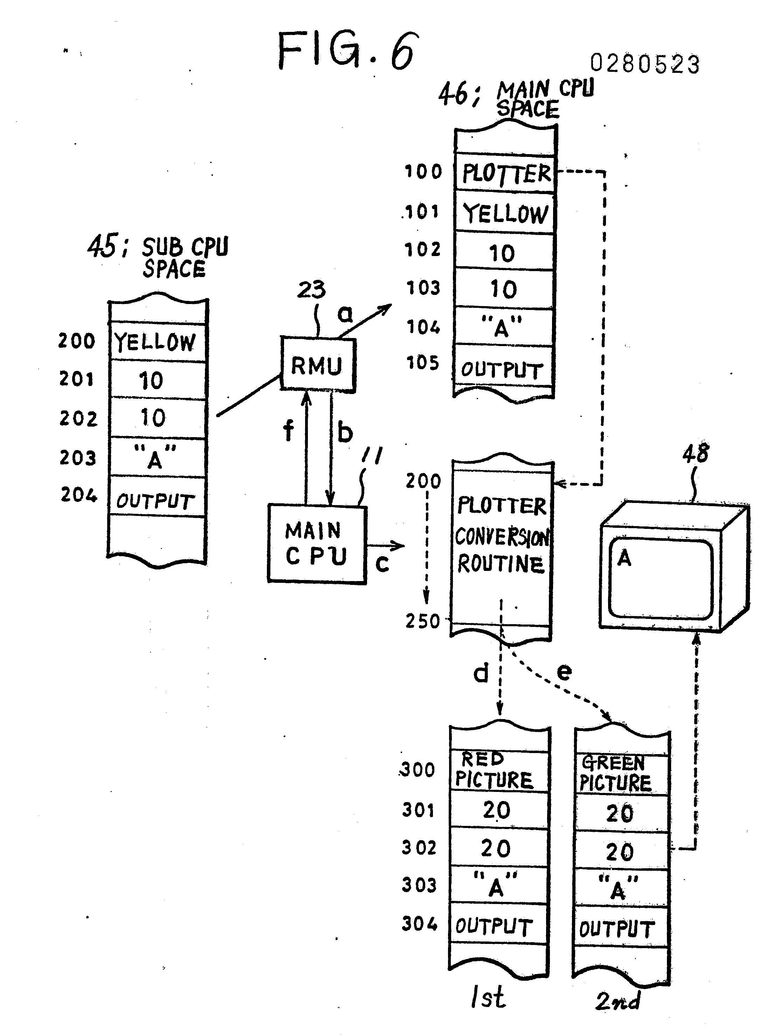

Next, an example to output characters on a color plotter by the sub CPU **12** is shown in **FIGURE** 6. In the case where no color plotter is available under the control of the main CPU **11**, but a color graphic display **48** is provided for the color plotter, the input/output conversion procedure will be somewhat complicated. That is, the sub CPU writes the input/output procedure through the virtual address "200" for which the color plotter interface in the I/O space of the sub CPU space **45** is provided. Based on the information from the main CPU **11**, The RMU **23** knows that conversion of the procedure written into the virtual address 200 is complicated, and judges that it is necessary to read out the conversion routine from the main CPU **11**.

Therefore, RMU **23** writes the I/O data which have been written in the sub CPU space **45** in the argument area (starts from address 100) of "Plotter Conversion Routine" within the peripheral equipments conversion program in the main CPU space **46** through the address conversion function (a). After the sub CPU **12** writes an execution instruction of "Output" of the virtual address "204", and RMU **23** writes its contents in the virtual address "105" in the main CPU space **46**, The RMU **23** causes an interrupt for the data conversion process to the main CPU **11** in order to start the main CPU **11** (b).

On the other hand, the main CPU **11** starts the plotter conversion routine (starts from address "200") according to this interrupt and executes the plotter conversion routine while referring to the contents of the argument area from address "100" (c). On this conversion routine, conversions of corresponding size and color are carried out. That is, since the picture size of the plotter and that of the graphic display **48** generally differ from each other, the display position has been expanded by two times both vertically and horizontally in the example. Further, in case of the plotter it is only necessary to specify a yellow pen to develop yellow, but in case of a graphic display **48**, light emittance of red and green must be specified, and it is therefore necessary to convert the procedure so as to write a character "A" both on the red and green pictures of the graphic display **48** (d and e).

To execute this control procedure, it is only necessary to write a series of instructions twice from address "300" of the I/O space of the color display **48**. That is, as shown in **FIGURE 6,** for the first time, the control procedure "output character A" is written from the (20, 20) position onto the red picture" from address "300" to "304". It is thus possible to display a yellow character "A" at the specified position on the color graphic display **48**. Then, the process is completed, the control is returned from the main CPU **11** to RMU **23** (f) and further, to the sub CPU **12**.

According to the above-mentioned embodiment, through the conversion process in RMU **23** it is possible to control equipment which is under the control of the main CPU **11** without any modification of the program of the sub CPU **12**. Furthermore, in this embodiment, when the conversion procedure is complicated and conversion is difficult to accomplish only with a microprogram of the RMU **23**, the conversion process is supported by additional conversion programs of the main CPU **11**. Therefore, a complicated conversion process also can be carried out.

Further, since an RMU is an arrangement among a multiple number of CPUs, I/Os and the main memory, and virtual addresses given at the CPU side are converted into physical addresses at the I/O side, CPUs are well coordinated through physical space. Therefore, when a new CPU in different model is to be connected. There is such an effect that coordination between the space of this newly connected CPU and the physical space will assure proper coordination with all other CPUs.

As described above, according to the present invention, the conversion unit which operates according to a microprogram converts addresses of the I/O equipment, data on I/O procedure and interruption information to the form which is compatible with another different computer system and therefore, it is possible to control I/O equipments arranged in the other computer system without modifying the program in the specific computer system.

Furthermore, the present invention has such an effect that as the conversion unit operates according to the microprogram, the running speed is faster. Moreover, by modifying the microprogram in many ways, it is possible to perform the conversion processes for various models, as mentioned above.

## Claims

1. A computer system conversion apparatus comprising:
   a microprogram storage unit storing a microprogram for conversion of the addresses of input/output equipment and data in a specific computer system into those required for a different computer system; and
   a conversion unit which operates to convert the addressed of the input/output equipment and the data in the specific computer system into those in the said different computer system in accordance with the microprogram stored in the microprogram storage unit.

2. A computer system conversion apparatus according to claim 1 wherein the conversion unit operates to convert addresses of the input/output equipment and the data based on the microprogram stored in the microprogram storage unit and a conversion program provided for said different computer system.

3. A computer system conversion apparatus according to claim 1 wherein the conversion unit also operates to convert interrupt information in accordance with the microprogram for conversion of interrupt information of the input/output equipment in a specific computer system into those in said different computer system.

4. A computer system conversion apparatus according to claim 1 wherein the conversion unit includes an address identity detection circuit which detects the requirement for conversion from the specific computer program to the said different computer program.

5. A computer system conversion apparatus according to claim 1 wherein the conversion unit includes means for utilising an interface program additional to the microprogram processing.

6. A computer system conversion apparatus according to claim 1 wherein the conversion unit includes means for swapping the data between the specific computer and another different computer.

7. A computer system conversion apparatus comprising:

means for storing a microprogram which converts an address of input/output equipment from a specific computer system to another different computer system; and

means for converting the address of the input/output equipment.

# FIG. 1

# FIG. 2

VIRTUAL
ADDRESS   CPU NO.   DATA

30

```
CONVERSION
TABLE
```

PHYSICAL
ADDRESS

# FIG. 3

# FIG. 4

0280523

45; SUB CPU SPACE

46; MAIN CPU SPACE

22; MMU

23; RMU

12

11

SUB CPU

MAIN CPU

MEMORY SPACE

MEMORY SPACE

ADDRESS CONVERSION

I/O SPACE

ADDRESS CONVESION

DATA CONVERSION

INTERRUPT CONVERSION

INTERFACE PROCESSING PROGRAM

I/O SPACE

⟷ ADDRESS INFORMATION

⟹ DATA INFORMATION

⟶ INTERRUPTION INFORMATION

0280523

# FIG. 5

45; SUB CPU SPACE

46; MAIN CPU SPACE

4-7

# FIG.6

0280523

**46; MAIN CPU SPACE**

| | |
|---|---|
| 100 | PLOTTER |
| 101 | YELLOW |
| 102 | 10 |
| 103 | 10 |
| 104 | "A" |
| 105 | OUTPUT |

**45; SUB CPU SPACE**

| | |
|---|---|
| 200 | YELLOW |
| 201 | 10 |
| 202 | 10 |
| 203 | "A" |
| 204 | OUTPUT |

23

a

**RMU**

f   b

11

**MAIN CPU**   c

| | |
|---|---|
| 200 | PLOTTER CONVERSION ROUTINE |
| 250 | |

48

A

d   e

| | 1st RED PICTURE | 2nd GREEN PICTURE |
|---|---|---|
| 300 | RED PICTURE | GREEN PICTURE |
| 301 | 20 | 20 |
| 302 | 20 | 20 |
| 303 | "A" | "A" |
| 304 | OUTPUT | OUTPUT |

1st           2nd